# EUROPEAN PATENT SPECIFICATION

(11) **EP 2 158 289 B1**
(45) Date of publication and mention of the grant of the patent: **07.12.2016**
(21) Application number: 08750554.1
(22) Date of filing: 09.05.2008
(51) Int. Cl.: C09K 8/528, C09K 8/72

(54) **METHODS FOR STIMULATING OIL OR GAS PRODUCTION**
VERFAHREN ZUR STIMULIERUNG DER ÖL- ODER GASFÖRDERUNG
PROCÉDÉS DE STIMULATION DE LA PRODUCTION D'HUILE OU DE GAZ

(30) Priority: 10.05.2007 US 801209; 10.05.2007 US 801200
(43) Date of publication of application: 03.03.2010
(60) Divisional application: 12188467.0
(73) Proprietor: Halliburton Energy Services, Inc., Duncan, OK 73533 (US)
(72) Inventor: WELTON, Thomas, D., Duncan, OK 73533 (US); PAULS, Richard, W., Duncan, OK 73533 (US)
(74) Representative: Cottrill, Emily Elizabeth Helen
(86) International application number: PCT/GB2008/001615
(87) International publication number: WO 2008/139164

(56) References cited:
- EP-A- 0 073 599
- EP-A- 1 188 772
- WO-A-2004/090282
- WO-A-2005/121273
- US-A- 4 353 805
- US-A1- 2004 011 527
- US-A1- 2006 243 449

## Description

### Technical Field

The invention generally relates to production enhancement to increase hydrocarbon production from a subterranean formation. More particularly, the invention relates to methods of treating a portion of a matrix of a subterranean formation or a proppant pack in a pre-existing fracture or perforation to increase permeability and enhance production, some of which techniques are referred to as near-wellbore stimulation. More particularly also, the invention relates to methods of treating downhole wellbore tubulars or subsurface completion equipment for mineral deposits, which deposits are generally referred to as scale, and especially for deposits containing calcium carbonate.

### Summary of the Invention

Accordingly the present invention provides a method for treating a downhole wellbore tubular or subsurface completion equipment, the method comprising the steps of:(A) determining the likelihood of the presence of scale in the downhole wellbore tubular or subsurface completion equipment; (B) forming or providing a treatment fluid comprising: (i) water; (ii) a chelating agent for forming a heterocyclic ring that contains a metal ion attached to at least two nonmetal ions, wherein the chelating agent is present at a concentration in the range of 1 to 80% by weight of the water ; and (iii) a viscosity-increasing agent comprising a polymeric material; (C) introducing the treatment fluid into the downhole wellbore tubular or the subsurface completion equipment; and (D) allowing the treatment fluid to dissolve and remove carbonates and other minerals from the downhole wellbore tubular or subsurface completion equipment, wherein the pH of the treatment fluid is equal to or greater than 5..

The preferred features are set out in the dependent claims 2 to 13.

Disclosed herein is a method for treating a portion of a subterranean formation or a proppant pack is provided. In general, the method comprises the steps of: (A) forming or providing a treatment fluid comprising: (i) water; (ii) a chelating agent capable of forming a heterocyclic ring that contains a metal ion attached to at least two nonmetal ions; and (iii) a viscosity-increasing agent; and (B) introducing the treatment fluid into the wellbore under sufficient pressure to force the treatment fluid into the matrix of the formation or the proppant pack.

Other and further objects, features and advantages of the present invention will be readily apparent to those skilled in the art when the following description of the preferred embodiments is read in conjunction with the accompanying drawings

### Detailed Description of a Preferred Embodiment

In one aspect the purpose of this invention is to improve delivery of a chelating agent for production enhancement by increasing the viscosity of the treatment fluid. A chelating agent can be utilized to help dissolve and remove carbonates and other minerals from the matrix of the subterranean formation or the proppant pack. The concentration of the chelating agent is sufficient to help dissolve a substantial amount of carbonate material. The treatment fluid containing the chelating agent includes a viscosity-increasing agent to help with placement of the fluid into the formation or proppant pack or to help with diversion of the treatment fluid.

When the viscosity of the fluid is increased or gelled, the treatment fluid can provide better coverage and diversion, and thereafter be broken for flowback from the well. The treatment fluid can be a single fluid that dissolves calcium/magnesium/iron carbonate solids in the matrix of the near region surrounding a wellbore, a pre-existing gravel pack, a pre-existing perforation, or a pre-existing fracture or that dissolves these solids in a proppant pack in a pre-existing perforation or a pre-existing fracture. The treatment fluid dissolves such solids at a controlled rate and under a wide range of conditions, especially over a broad range of pH and time. The invention can be advantageous because it can provide methods for treating the matrix of a subterranean formation or a pre-existing proppant pack for such purposes using treatment fluids that are non-acid containing and non-corrosive.

The treatment methods according to the invention are expected to be effective for applications associated with well completion and remediation, including: removal of carbonate scale from the formation and fractures in the formation; removal of carbonate from formations or proppant packs where the carbonate lines pore throats; stimulation for carbonate containing formations where the use of acidic fluids might be problematic, for example, in high-temperature formations due to reaction rates, or due to corrosion, etc. For a stimulation treatment, the purpose is to improve the skin of the matrix of the formation over its original condition, and a greater depth of matrix penetration is desirable. For a damage removal treatment, such as after a prior gel treatment or completion damage, less depth of penetration can be sufficient (all else being equal), where the purpose of the damage removal is to get the permeability of the matrix of the formation back toward its original condition. According to a presently preferred embodiment, the treatment method is used as a remedial cleanup after a prior stimulation treatment.

Disclosed herein is a method for treating a portion of a subterranean formation or proppant pack, the method comprising the steps of: (A) forming or providing a treatment fluid comprising: (i) water; (ii) a chelating agent capable of forming a heterocyclic ring that contains a metal ion attached to at least two nonmetal ions; and (iii) a viscosity-increasing agent; and (B) introducing the treatment fluid into the wellbore under sufficient pressure to force the treatment fluid into the matrix of the formation or the proppant pack. As used herein, "into the matrix of the formation or the proppant pack" means into the rock around the wellbore, a pre-existing perforation, or a pre-existing fracture, or into the matrix of a proppant pack in a gravel pack in the wellbore, a pre-existing perforation, or a pre-existing fracture. The method is adapted to be used after drilling a wellbore, either during completion or remediation of a well.

It is believed that the chelating agent in the treatment fluid can react with and dissolve calcium carbonate, magnesium carbonate, dolomite, iron carbonate, and similar materials of the formation to increase the permeability of the formation. It can also be used to help remove carbonate from formations where the carbonate lines the pore throats in the matrix of the formation, whereby the permeability of the formation can be increased and hydrocarbon production enhanced. It is desirable to allow the treatment fluid to contact the matrix of the formation or the proppant pack for a sufficient time to dissolve such carbonate materials. CaCO₃ is known as limestone; and CaMg(CO₃)₂ is known as dolomite or dolomitic limestone, both of which are minerals that are often present in subterranean formations or which may precipitate from water as scale in subterranean formations or proppant packs. Typical scales are of calcium carbonate, calcium sulfate, barium sulfate, strontium sulfate, iron sulfide, iron oxides, iron carbonate, various silicates and phosphates and oxides, or any of a number of compounds insoluble or slightly soluble in water. Although it may not be expected to dissolve all of the components of scale, the chelating agent can be helpful in removing calcium carbonate, magnesium carbonate, dolomite, iron carbonate, and similar materials of scale.

Scale can be comprised of various mineral component deposits that can form over the inner walls of downhole casing, production tubing, and completion equipment, such as valves, gas-lift mandrels, and fluid pumps. Scale can be deposited along water paths in a subterranean formation, through wellbore tubulars, to surface equipment and surface tubulars. The scale can become so voluminous that it clogs the downhole wellbore tubulars or downhole equipment.

Scale in the oil field environment can be formed as a result of mixing two incompatible waters downhole to create produced water that is oversaturated with scale-forming minerals. Scale can also be formed when the state of the water being produced is changed such that the solubility limit for one or more mineral components is exceeded. The solubility limit of each mineral component in an aqueous solution has a complex relationship to several factors, including temperature, pressure, the concentrations of other mineral components in solution, and pH. In general, but not for all minerals, a decrease in temperature tends to decrease the water solubility of the mineral. Similarly, a substantial decrease in pressure tends to decrease the water solubility of a mineral. Further, the solubility of a mineral can be impacted by the concentrations of other minerals in the solution. The solubility of certain minerals, such as carbonate minerals, is also increased in the presence of acid gases such as carbon dioxide and hydrogen sulfide, where carbonate solubility tends to increase as with increasing acidity. Carbon dioxide and hydrogen sulfide at high pressure can make water quite acidic. Water containing such gases produced from a subterranean formation containing carbonate rock can have a high concentration of dissolved carbonate.

In producing water from a subterranean formation, the temperature tends to decrease and the pressure can also be decreased, both of which changes can contribute to precipitating minerals from the water to form scale in downhole wellbore tubulars and equipment. In the case of releasing pressure, carbon dioxide or hydrogen sulfide may also be released, allowing the pH of the produced water to rise. Such changes can cause scale deposits. Sometimes so much scale can be deposited that the scale blocks the fluid flow path through the downhole wellbore tubulars or equipment, and even downstream in surface tubulars and equipment.

Although the solubility limits of various minerals have complex relationships with temperature, pressure, the concentrations of other minerals in the solution, and pH, such relationships are becoming increasingly well known and understood and it is possible to make computer models of downhole conditions that are likely to produce scale deposits.

In another aspect, the invention relates to improving delivery of a chelating agent and the flowing back of the fluid for scale removal by increasing the viscosity of the treatment fluid. A chelating agent can be utilized to help dissolve and remove carbonates and other minerals from a wellbore tubular. The concentration of the chelating agent is sufficient to help dissolve a substantial amount of carbonate material. The treatment fluid containing the chelating agent includes a viscosity-increasing agent to help with placement of the treatment fluid and to help carry out some scale with the flow back of the treatment fluid. When the viscosity of the fluid is increased or gelled, the treatment fluid can provide better coverage and carry suspended particles, including small pieces of scale. The treatment fluid can be a single fluid that dissolves calcium/magnesium/iron carbonate solids in a wellbore tubular at a controlled rate and under a wide range of conditions, especially over a broad range of pH and time. The invention can be advantageous because it can provide methods for treating wellbore tubulars for such purposes using treatment fluids that are non-acid containing and non-corrosive.

The treatment methods according to the invention are expected to be effective for applications associated with: removal of carbonate scale from downhole wellbore tubulars or subsurface wellbore completion equipment, particularly where the use of strongly acidic fluids might be problematic, for example, in high-temperature formations due to reaction rates, or due to corrosion, etc.

Determining the likelihood of the presence of carbonate scale in the downhole wellbore tubular or subsurface equipment is an important step in the remediation process according to the invention.

Scale in wellbore tubulars or subsurface completion equipment tends to occur as a thick layer on the inside wall of the tubular or completion equipment. The scale lowers the production rate from the wellbore by increasing the surface roughness of the inner wall of the tubular or equipment and reducing the cross-sectional flow area. The pressure required to push a fluid through the tubular area increases, flow decreases, and production decreases. In an injection well, scale damage is usually caused by temperature-activated autoscaling. In addition, incompatible mixing of different waters can occur when injection water contacts either natural formation water or completion brine. Scale formed in an injection well can decrease the effectiveness of a water-flood strategy. In a production well, scale damage can occur with a change in state in the produced water, for example, a decrease in temperature and pressure, or an increase in pH from a relatively acidic state. Regardless of the particular origin or cause of the scale, a reduction in fluid flow can be an indicator of the build of scale.

According to another embodiment of the invention, production analysis can indicate wellbore tubing scale, especially if a well suddenly demonstrates tubing constraints that were not present during early production.

The onset of water production is often a sign of potential scale problems, especially if it coincides with a simultaneous reduction in oil production. Tracking water chemistry and in particular the dissolved ion content of the produced water can be important indicators for the likelihood of scale formation. Dramatic changes in the concentrations of scaling ions, especially if coinciding with reduced oil production and increased water cut, can signal that injection water has broken through and scale is beginning to form. A review of the well history in response to any previous chemical interventions, such as acid treatments, can help in the making of these interpretations.

Determining the likelihood of the presence of carbonate scale can also be obtained by taking samples of downhole scale or X-ray evidence from core analysis. Gamma ray log interpretation often indicates barium sulfate scale because naturally occurring radioactive strontium tends to precipitate with this type of scale mineral.

Wells with intelligent completions and permanent monitoring systems can also be designed to detect changes in water chemistry. Downhole scale sensors and permanent monitoring applications are areas of active research.

Chemical modeling can be used to determine the likelihood of the presence of scaling based on tracking water analysis for mineral concentrations and other conditions, such as temperature, pressure, pH, and gas-phase compositions. The results of such techniques can be used to indicate the need for scale treatment of the downhole wellbore tubulars or subsurface equipment.

It is believed that the chelating agent in the treatment fluid can react with and dissolve calcium carbonate, magnesium carbonate, dolomite, iron carbonate, and similar materials of scale in the wellbore tubular, helping to re-open up the tubular, whereby hydrocarbon production through the tubular can be enhanced. CaCO₃ and CaMg(CO₃)₂ may precipitate from water as scale in wellbore tubulars. Typical scales are of calcium carbonate, calcium sulfate, barium sulfate, strontium sulfate, iron sulfide, iron oxides, iron carbonate, various silicates and phosphates and oxides, or any of a number of compounds insoluble or slightly soluble in water. Although it may not be expected to dissolve all of the components of scale, the chelating agent can be helpful in removing calcium carbonate, magnesium carbonate, dolomite, iron carbonate, and similar materials of scale.

As used herein, the words "comprise," "has," and "include" and all grammatical variations thereof are each intended to have an open, non-limiting meaning that does not exclude additional elements or steps.

As used herein, to chelate means to combine a metal ion with a chemical compound to form a ring. "The adjective chelate, derived from the great claw or chela (chely- Greek) of the lobster or other crustaceans, is suggested for the caliper like groups which function as two associating units and fasten to the central atom so as to produce heterocyclic rings." Sir Gilbert T. Morgan and H.D.K. Drew [J. Chem. Soc., 1920, 117, 1456].

Preferably, the water further includes a water-soluble inorganic salt dissolved therein. The purpose of the inorganic salt can be, for example, to weight the water of the treatment fluid or to make the treatment fluid more compatible and less damaging to the subterranean formation. It should be understood, of course, that a source of at least a portion of the water and the inorganic salt can be selected from the group consisting of natural or synthetic brine or seawater. Inorganic salt or salts can also be mixed with the water of the treatment fluid to artificially make up or increase the inorganic salt content in the water. Alternatively for these types of purposes, a water-soluble salt replacement can be utilized such as tetramethyl ammonium chloride (TMAC) and similar organic compounds.

It is a particular advantage of the methods according to the invention to be able to help remove carbonate and similar materials without the use of strongly acidic treatment compositions, that is, without the use of treatment compositions having a pH less than 2.

According to the present invention, the pH of the treatment fluid is equal to or greater than 5, which is well above the pH of spent acid fluids used for the purpose of removing carbonate, where the pH of an acid fluid is typically less than about 3.5. The compositions of the present invention can be used to help dissolve and remove carbonate materials from the formation with less acidic compositions. In some applications, acidic compositions can be damaging to the well or hydrocarbon production.

Most preferably, according to the invention, the pH of the treatment fluid is in the range of 6 - 12, which can be used to avoid or reduce the use of substantially acidic compositions in treating the formation. It is important to note, of course, that different chelating agents work better in certain pH ranges than other ranges. Some chelating agents can be effective in the higher pH ranges. One skilled in the art would also recognize the obvious advantage of using a non-acid fluid may reduce the rate of corrosion.

In particular, the chelating agent is selected to be effective for chelating at least calcium ions. It is also highly desirable that the chelating agent is soluble in distilled water at standard temperature and pressure at a concentration of at least 0.2 mole-equivalent for calcium ions per liter of the distilled water. As a test for whether or not the chelating agent would be effective for use in the present invention, it is believed that a solution of the chelating agent at a concentration of 0.2 mole-equivalent for calcium ions per liter of the distilled water should be effective for chelating at least 0.1 mole calcium ions per liter. Preferably, the test solution is effective when adjusted to have a pH in the range of 5 - 6. More preferably, the test solution is effective when adjusted to have a pH in the range of 6 - 8. One skilled in the art would recognize that similar tests can be performed for other ions such as magnesium, iron, etc.

There are numerous examples of suitable chelating agents. For various reasons including effectiveness, ready availability, and economical cost, the chelating agent is preferably selected from the group consisting of ethylenediamine tetraacetic acid ("EDTA"), nitrilotriacetic acid ("NTA"), hydroxyethylethylenediaminetriacetic acid ("HEDTA"), diethylenetriaminepentaacetic acid ("DTPA"), propylenediaminetetraacetic acid ("PDTA"), ethylenediaminedi(o-hydroxyphenylacetic) acid ("EDDHA"), a sodium or potassium salt of any of the foregoing, dicarboxymethyl glutamic acid tetrasodium salt ("GLDA"), a derivative of any of the foregoing or any combination in any proportion thereof. It is to be understood, of course, that a derivative may be employed provided that the substitution of an atom or group of atoms in the parent compound for another atom or group of atoms does not substantially impair the function of the derivative relative to the parent compound. A derivative would also include compounds that do not have the functionality, but would regain functionality due to some process in use such as a reaction, hydrolysis, degradation, etc. The chelating agent is preferably at a concentration of at least 0.01% by weight of the water. The chelating agent is present at a concentration in the range of 1% to 80% by weight of the water.

The viscosity-increasing agent would typically comprise a polymeric material. For various reasons including effectiveness, ready availability, and economical cost, the polymeric material is preferably selected from the group consisting of: guar gum and its derivatives, cellulose derivatives, welan gum, xanthan biopolymer and its derivatives, diutan, and its derivatives, scleroglucan and its derivatives, succinoglycan biopolymer and its derivatives, and any combination of any of the foregoing in any proportion. Derivatives can include, for example, industrially manufactured chemical derivatives, bioengineered chemical derivatives, or naturally occurring derivatives produced by mutated organisms producing the polymer. A preferred polymer is of the nature taught in U.S. Patent Application Serial No. 20060014648.

According to another aspect of the invention, the viscosity-increasing agent can advantageously comprise a viscoelastic surfactant. One perceived advantage of a surfactant gel is that it has much less potential for leaving a polymer residue. The viscoelastic surfactant may comprise any viscoelastic surfactant known in the art, any derivative thereof, or any combination thereof. As used herein, the term "viscoelastic surfactant" refers to a surfactant that imparts or is capable of imparting viscoelastic behavior to a fluid due, at least in part, to the association of surfactant molecules to form viscosifying micelles. These viscoelastic surfactants may be cationic, anionic, nonionic, or amphoteric/zwitterionic in nature.

The viscoelastic surfactants may comprise any number of different compounds, including methyl ester sulfonates , hydrolyzed keratin (e.g., as described in United States Patent No. 6,547,871 issued April 15, 2003 to Halliburton Energy Services, Inc.,), sulfosuccinates, taurates, amine oxides, ethoxylated amides, alkoxylated fatty acids, alkoxylated alcohols (e.g., lauryl alcohol ethoxylate, ethoxylated nonyl phenol), ethoxylated fatty amines, ethoxylated alkyl amines (*e*.*g*., cocoalkylamine ethoxylate), betaines, modified betaines, alkylamidobetaines (*e*.*g*., cocoamidopropyl betaine), quaternary ammonium compounds (*e*.*g*., trimethyltallowammonium chloride, trimethylcocoammonium chloride), derivatives of any of the foregoing, and any combinations of any of the foregoing in any proportion.

Suitable viscoelastic surfactants may comprise mixtures of several different compounds, including but not limited to: mixtures of an ammonium salt of an alkyl ether sulfate, a cocoamidopropyl betaine surfactant, a cocoamidopropyl dimethylamine oxide surfactant, sodium chloride, and water; mixtures of an ammonium salt of an alkyl ether sulfate surfactant, a cocoamidopropyl hydroxysultaine surfactant, a cocoamidopropyl dimethylamine oxide surfactant, sodium chloride, and water; mixtures of an ethoxylated alcohol ether sulfate surfactant, an alkyl or alkene amidopropyl betaine surfactant, and an alkyl or alkene dimethylamine oxide surfactant; aqueous solutions of an alpha-olefinic sulfonate surfactant and a betaine surfactant; and any combination of the foregoing mixtures in any proportion. Examples of suitable mixtures of an ethoxylated alcohol ether sulfate surfactant, an alkyl or alkene amidopropyl betaine surfactant, and an alkyl or alkene dimethylamine oxide surfactant are described in United States Patent No. 6,063,738, issued May 16, 2000 to Halliburton Energy Services, Inc. Examples of suitable aqueous solutions of an alpha-olefinic sulfonate surfactant and a betaine surfactant are described in United States Patent No. 5,897,699,. Examples of commercially-available viscoelastic surfactants suitable for use in the present invention may include, but are not limited to, Mirataine BET-O 30™ (an oleamidopropyl betaine surfactant available from Rhodia Inc., Cranbury, New Jersey), Aromox APA-T™ (an amine oxide surfactant available from Akzo Nobel Chemicals, Chicago, Illinois), Ethoquad 0/12 PG™ (a fatty amine ethoxylate quat surfactant available from Akzo Nobel Chemicals, Chicago, Illinois), Ethomeen T/12™ (a fatty amine ethoxylate surfactant available from Akzo Nobel Chemicals, Chicago, Illinois), Ethomeen S/12™ (a fatty amine ethoxylate surfactant available from Akzo Nobel Chemicals, Chicago, Illinois), and Rewoteric AM TEG™ (a tallow dihydroxyethyl betaine amphoteric surfactant available from Degussa Corp., Parsippany, New Jersey).

According to a preferred embodiment of the invention, the viscosity-increasing agent is at a concentration in the treatment fluid that is at least sufficient to make the viscosity of the treatment fluid greater than water. More preferably, the viscosity-increasing agent is at a concentration in the treatment fluid that is sufficient to make the viscosity of the treatment fluid greater than 5 cP when measured at 511 reciprocal seconds on a Fann 35A model viscometer with a number 1 spring and bob. More preferably, the viscosity-increasing agent is at a concentration in the treatment fluid that is sufficient to make the viscosity of the treatment fluid in the range of 10 cP to 100 cP when measured at 511 reciprocal seconds on a Fann 35A model viscometer with a number 1 spring and bob.

According to another preferred embodiment according to the invention, the viscosity-increasing polymeric agent is at a concentration of at least 0.05% by weight of the water. More preferably, the viscosity-increasing agent is at a concentration in the range of 0.05% to 10% by weight of the water.

It is contemplated that it will sometimes be desirable to further increase the viscosity of the treatment fluid. One technique for doing so is to crosslink a polymeric viscosity-increasing agent. According to such an embodiment of the invention, the treatment fluid further comprises a crosslinking agent to crosslink the polymeric material of the viscosity-increasing agent. A multitude of crosslinking agents for such purposes are known in the art. Preferably, the crosslinking agent is selected from the group consisting of: borate releasing compounds, a source of titanium ions, a source of zirconium ions, a source of antimony ions, a source of aluminum ions, a source of periodate ions, a source of permanganate ions, and any combination thereof in any proportion. According to a preferred embodiment, the crosslinking agent is at a concentration of at least 0.025% by weight of the water. According to a more preferred embodiment of the invention, the crosslinking agent is at a concentration in the range of 0.025% to about 1% by weight of the water. When the treatment fluid for use in the methods according to the invention includes a crosslinking agent, it can also be desirable for the treatment fluid to further include a breaker for the crosslinked agent.

According to another aspect of the invention, the treatment fluid preferably further comprises a breaker adapted to break the viscosity-increasing agent. For example, when the viscosity-increasing agent is polysaccharide based, the breaker is selected to be effective for breaking a polysaccharide-based viscosity-increasing agent. The breaker can be, for example, an enzyme. By way of further example, when the polysaccharide-based viscosity-increasing agent includes starch, the enzyme is selected to be effective for breaking starch. Preferably, an enzyme breaker is at a concentration of at least 0.01 lb per 1000 gal (1.2g/m³) of the water. More preferably, the enzyme breaker is at a concentration in the range of 0.01 lb to 40 lb per 1000 gal of (1.2g-4.8 kg/m³) the water. As will be appreciated by persons of skill in the art, however, enzymes are often used as liquid compositions and that the above mentioned values are for fully formulated dry enzyme breakers that typically contain a large percentage of fillers.

When a breaker is employed for the viscosity-increasing agent, the breaker is at a concentration that is at least sufficient to substantially reduce the viscosity produced by the viscosity producing agent in the treatment fluid. In such case, a preferred embodiment of the method according to the invention includes the steps of allowing time for the breaker to break the viscosity of the treatment fluid and then flowing back the broken fluid from the wellbore.

For many types of viscosity-increasing agents, the breaker is preferably an oxidizer selected from the group consisting of: a persulfate; a perborate; a bromate; a periodate; a chlorate; a chlorite; a hypochlorite, an organic peroxide; and any combination thereof in any proportion. Further, the breaker is more preferably selected from the group consisting of a lithium, sodium, potassium, or ammonium salt of any of the foregoing, and any combination thereof in any proportion. The oxidizing breaker for breaking a viscosity-increasing agent internal to the treatment fluid is preferably at a concentration of at least 0.01 lb per 1000 gal (1.2g/m³) of the water. More preferably, such a breaker is at a concentration in the range of 0.1 to 200 lb per 1000 gal (12g-24kg/m³) of the water.

It is contemplated that in some applications of the methods according to the invention, it may be desirable that the breaker be a delayed release breaker. One technique for making a delayed breaker is to coat or encapsulate the breaker to delay the release of the breaker into the water. Another technique is to generate the breaker in situ over time or upon a change in pH of the treatment fluid.

According to a preferred embodiment of the invention, the method further includes the step of: after introducing the treatment fluid into the wellbore, allowing the viscosity of the treatment fluid to break to a substantially lower viscosity fluid while down hole. According to a further preferred embodiment, the method further comprises the step of: after allowing the viscosity of the treatment fluid to break, flowing the fluid back from the well.

According to further embodiments of the methods of the invention, the treatment fluid can further comprise a breaker to be carried by the treatment fluid into the wellbore for breaking a viscosity-increasing agent that is external of the treatment fluid. According to these embodiments, the breaker for the viscosity-increasing agent in the treatment fluid is preferably at a concentration in an external aqueous fluid that is at least sufficient to substantially break the viscosity of the treatment fluid. The breaker for a viscosity-increasing agent that is external to the treatment fluid can be the same or different than the breaker for the viscosity-increasing agent in the treatment fluid. The additional or different breaker for breaking a viscosity-increasing agent external to the treatment fluid is preferably at a concentration of at least 0.01 lb per 1000 gal of the water. More preferably, the breaker is at a concentration in the range of 0.1 lb to 200 lb per 1000 gal of the water.

According to a preferred embodiment of the invention, the treatment fluid is allowed a sufficient time to attack the scale in the wellbore tubular.

According to another preferred embodiment of the invention, the treatment fluid is flowed back from the well without breaking the viscosity of the fluid. The purpose of the maintaining the viscosity of the treatment fluid during a step of flowing back of the treatment fluid is to help carry particles and pieces of the scale that may be loosened from the scale layers but not completely dissolved by the treatment fluid.

It is contemplated that the methods according to the invention can include foaming of the treatment fluid. According to these embodiments, the treatment fluid further comprises: an additive for foaming. The treatment fluid may be formed at a remote location and provided to the well site for the treatment method, or it can be formed locally at the well site. The treatment fluid preferably further comprises: a sufficient gas to form a foam. As used herein, foam also refers to commingled fluids. Preferably, the gas would be mixed with the other constituents of the treatment fluid at the well site to form a foamed or co-mingled fluid. According to a preferred embodiment of the invention, the gas is selected from the group consisting of: air, CO₂, nitrogen, and any combination thereof in any proportion. In applications of the method utilizing a gas, typically, the gas is at a concentration in the range of 5% to 95% by volume of the water.

According to one aspect of the methods of the invention, the step of introducing the treatment fluid into the wellbore further comprises: introducing the treatment fluid at a rate and pressure below the fracture gradient of the subterranean formation. According to a further embodiment, the treatment fluid is applied such that the treatment fluid is introduced such that the proppant pack of a previously generated fracture or gravel pack is treated.

As will be appreciated by those of skill in the art, in the context of using a method according to the invention to treat a portion of the subterranean formation surrounding a wellbore, the permeability of the matrix of the surrounding formation would be expected to be relatively high. According to a further embodiment, the treatment fluid is applied such that the portion of the subterranean formation is a portion surrounding the wellbore, and wherein the treatment fluid is introduced such that the portion surrounding the wellbore is expected to be saturated to a depth of at least 1 foot. More preferably, the treatment fluid is applied such that the portion surrounding the wellbore is expected to be saturated to a depth in the range of 1 foot to 3 fleet (0.305-0.915m). Of course, it is recognized that desired or expected depth of penetration into the surrounding matrix of the formation will not necessarily be perfectly uniform. It is also recognized that the parameters for designing a treatment for a desired or expected depth of penetration are well known in the art, including, for example, the length of the wellbore to be treated and the volume of treatment fluid injected into the wellbore. One skilled in the art will recognize that a deeper penetration may be desired or obtained in formations with higher permeability.

In some situations, the permeability of the matrix of the surrounding formation would be expected to be relatively low. According to another embodiment, the portion of the subterranean formation is an area surrounding a fracture extending into the formation, and the treatment fluid is introduced such that the surrounding area is expected to be saturated to a depth of at least 0.1 inches. More preferably, the treatment fluid is introduced into the wellbore under conditions such that the area surrounding the fracture is expected to be saturated to a depth in the range of 0.1 inches to 2 inches (0.254-5.08 cm). One skilled in the art will recognize that a deeper penetration may be desired or obtained in formations with higher permeability.

According to another embodiment, the portion of the subterranean formation is a perforation tunnel, and the treatment fluid is introduced such that the perforation tunnel and the surrounding area is expected to be saturated to a depth of at least 0.1 inches. More preferably, the treatment fluid is introduced into the wellbore under conditions such that the area surrounding the perforation tunnel is expected to be saturated to a depth in the range of 0.1 inches to 2 inches. One skilled in the art will recognize that a deeper penetration may be desired or obtained in formations with higher permeability.

One of skill in the art will further recognize that for the purpose of treating the matrix of a proppant pack in a pre-existing gravel pack, fracture, or perforation, it may not be necessary or desirable to penetrate into the matrix of the surrounding formation.

According to another aspect of the methods of the invention, the methods further comprise the step of: after the step of introducing the treatment fluid, introducing a non-viscosified treatment fluid into the wellbore, wherein the non-viscosified treatment fluid comprises: water and a chelating agent, without any substantial concentration of any viscosity-increasing agent. According to this aspect, the viscosified treatment fluid is capable of moving into zones of the subterranean formation that have relatively higher permeability, thereby diverting the non-viscosified treatment fluid into zones of the subterranean formation that have relatively lower permeability. According to this aspect, the injection pressure is preferably maintained from the step of introducing the treatment fluid to the step of introducing the non-viscosified treatment fluid.

According to yet another aspect of the methods of the invention, the methods further comprise the step of: applying an afterflush fluid to the portion of the subterranean formation or wellbore tubular. For example, the afterflush fluid can comprise: water, a gas, a brine, a hydrocarbon, or a mixture thereof.

An example of a treatment fluid for use in the methods according to the invention was formed as shown in the following Table 1:

| **TABLE 1** | | |
|---|---|---|
| Component | Per 200 ml | Per 1000 gallons |
| Water | 157.6 ml | 788 US gals |
| H4EDTA 98% | 46.61 g | 1987 lbs |
| Potassium Hydroxide Solid 96% | 20.95 g | 870 lbs |
| Xanthan | 0.96 g | 40 lb/Mgal |

The rheological properties of the example composition were measured on a Fann Model 35 A viscometer as shown in the following Table 2:

| **TABLE 2** | | |
|---|---|---|
| | 300 rpm | 600 rpm |
| Dial Reading at room temperature | 21 | 29 |
| Dial Reading at room temperature after 4 hours at 175°F | 29 | 35 |

Therefore, the methods of the present invention are well adapted to carry out the objects and attain the ends and advantages mentioned as well as those that are inherent therein.

## Claims

1. A method for treating a downhole wellbore tubular or subsurface completion equipment, the method comprising the steps of:
(A) determining the likelihood of the presence of scale in the downhole wellbore tubular or subsurface completion equipment;
(B) forming or providing a treatment fluid comprising:
(i) water;
(ii) a chelating agent for forming a heterocyclic ring that contains a metal ion attached to at least two nonmetal ions, wherein the chelating agent is present at a concentration in the range of 1 to 80% by weight of the water ; and
(iii) a viscosity-increasing agent comprising a polymeric material;
(C) introducing the treatment fluid into the downhole wellbore tubular or the subsurface completion equipment; and
(D) allowing the treatment fluid to dissolve and remove carbonates and other minerals from the downhole wellbore tubular or subsurface completion equipment, wherein the pH of the treatment fluid is equal to or greater than 5.

2. A method according to claim 1, wherein the pH of the treatment fluid is in the range of 6 - 12.

3. A method according to claim 1, wherein the chelating agent is used in the method for chelating at least calcium ions.

4. A method according to claim 1, wherein the chelating agent is soluble in distilled water at standard temperature and pressure at a concentration of at least 0.2 mole-equivalent for calcium ions per liter of the distilled water.

5. A method according to claim 1, wherein the chelating agent is selected from the group consisting of ethylenediamine tetraacetic acid ("EDTA"), nitrilotriacetic acid ("NTA"), hydroxyethylethylenediaminetriacetic acid ("HEDTA"), diethylenetriaminepentaacetic acid ("DTPA"), propylenediaminetetraacetic acid ("PDTA"), ethylenediaminedi(o-hydroxyphenylacetic) acid ("EDDHA"), a sodium or potassium salt of any of the foregoing, dicarboxymethyl glutamic acid tetrasodium salt ("GLDA"), or any combination of any of the foregoing in any proportion.

6. A method according to claim 1, wherein the viscosity-increasing agent comprises a polymeric material selected from the group consisting of: guar gum, cellulose derivatives, welan gum, xanthan biopolymer, diutan, scleroglucan, and succinoglycan biopolymer and a combination thereof.

7. A method according to claim 1, wherein the viscosity-increasing agent is at a concentration in the range of 0.05% to 10% by weight of the water.

8. A method according to claim 1, wherein the treatment fluid further comprises a breaker for breaking the viscosity-increasing agent.

9. A method according to claim 1, wherein the treatment fluid further comprises a breaker to be carried by the treatment fluid into the wellbore for breaking a viscosity-increasing agent.

10. A method according to claim 1, wherein the treatment fluid further comprises: an additive for foaming.

11. A method according to claim 1, wherein the step of introducing the treatment fluid into the wellbore further comprises:
introducing the treatment fluid at a rate and pressure below the fracture gradient of the subterranean formation.

12. A method according to claim 1, further comprising the step of: after the step of introducing the treatment fluid, introducing a non-viscosified treatment fluid into the wellbore, wherein the non-viscosified treatment fluid comprises: water and a chelating agent, without any concentration of any viscosity-increasing agent comprising a polymeric material.

13. A method according to claim 1, wherein at least a portion of the downhole wellbore tubular or subsurface completion equipment is treated, wherein the chelating agent is used in the method for chelating at least calcium ions and the pH of the treatment fluid is equal to or greater than 5.

## Patentansprüche

1. Verfahren zum Behandeln eines Untertagebohrlochrohrelements oder unterirdischen Komplettierungsausrüstungsteils, wobei das Verfahren folgende Schritte umfasst:
(A) Bestimmen der Wahrscheinlichkeit des Vorhandenseins von Ablagerungen in dem Untertagebohrlochrohrelement oder unterirdischen Komplettierungsausrüstungsteil;
(B) Bilden oder Bereitstellen eines Behandlungsfluids, umfassend:
(i) Wasser;
(ii) einen Chelatbildner zum Bilden eines heterozyklischen Rings, der ein Metallion enthält, das an wenigstens zwei Nichtmetallionen gebunden ist, wobei der Chelatbildner in einer Konzentration im Bereich von 1 bis 80 Gew.-% Wasser vorliegt; und
(iii) ein viskositätssteigerndes Mittel, das ein Polymermaterial umfasst;
(C) Einleiten des Behandlungsfluids in das Untertagebohrlochrohrelement oder unterirdische Komplettierungsausrüstungsteil; und
(D) Zulassen, dass sich das Behandlungsfluid löst und Carbonate und andere Mineralien von dem Untertagebohrlochrohrelement oder unterirdischen Komplettierungsausrüstungsteil entfernt, wobei der pH-Wert des Behandlungsfluids gleich oder größer als 5 ist.

2. Verfahren nach Anspruch 1, wobei der pH-Wert des Behandlungsfluids im Bereich von 6 bis 12 liegt.

3. Verfahren nach Anspruch 1, wobei der Chelatbildner in dem Verfahren zum Chelatisieren von wenigstens Kalziumionen verwendet wird.

4. Verfahren nach Anspruch 1, wobei der Chelatbildner in destilliertem Wasser bei Normaltemperatur und -druck bei einer Konzentration von wenigstens 0,2 Moläquivalenten Kalziumionen pro Liter des destillierten Wassers löslich ist.

5. Verfahren nach Anspruch 1, wobei der Chelatbildner ausgewählt wird aus der Gruppe bestehend aus Ethylendiamintetraessigsäure ("EDTA"), Nitrilotriessigsäure ("NTA"), Hydroyethylethylendiamintriessigsäure ("HEDTA"), Diethylentriaminpentaessigsäure ("DTPA"), Propylendiamintetraessigsäure ("PDTA"), Ethylendiamindi(o-hydroxyphenylessigsäure) ("EDDHA"), einem Natrium- oder Kaliumsalz von einem der Vorstehenden, Dicarboxymethylglutaminsäuretetranatriumsalz ("GLDA") oder einer beliebigen Kombination beliebiger der Vorstehenden in beliebiger Proportion.

6. Verfahren nach Anspruch 1, wobei das viskositätssteigernde Mittel ein Polymermaterial umfasst, ausgewählt aus der Gruppe bestehend aus: Guargummi, Zellulosederivaten, Welangummi, Xanthanbiopolymer, Diutan, Scleroglucan und Succinoglycanbiopolymer und einer Kombination davon.

7. Verfahren nach Anspruch 1, wobei das viskositätssteigernde Mittel in einer Konzentration im Bereich von 0,05 Gew.-% bis 10 Gew.-% des Wassers vorliegt.

8. Verfahren nach Anspruch 1, wobei das Behandlungsfluid ferner ein Aufbrechmittel zum Aufbrechen des viskositätssteigernden Mittels umfasst.

9. Verfahren nach Anspruch 1, wobei das Behandlungsfluid ferner ein Aufbrechmittel umfasst, das von dem Behandlungsfluid in das Bohrloch getragen wird, um das viskositätssteigernde Mittel aufzubrechen.

10. Verfahren nach Anspruch 1, wobei das Behandlungsfluid ferner Folgendes umfasst: einen Zusatzstoff zur Schaumbildung.

11. Verfahren nach Anspruch 1, wobei der Schritt des Einleitens des Behandlungsfluids in das Bohrloch ferner Folgendes umfasst:
Einleiten des Behandlungsfluids bei einer Geschwindigkeit und einem Druck unter dem Frakturgradienten der unterirdischen Formation.

12. Verfahren nach Anspruch 1, ferner folgenden Schritt umfassend: nach dem Schritt des Einleitens des Behandlungsfluids, Einleiten eines nicht viskosifizierten Behandlungsfluids in das Bohrloch, wobei das nicht viskosifizierte Behandlungsfluid Folgendes umfasst: Wasser und einen Chelatbildner ohne eine Konzentration eines viskositätssteigernden Mittels, das ein Polymermaterial umfasst.

13. Verfahren nach Anspruch 1, wobei wenigstens ein Teil des Untertagebohrlochrohrelements oder unterirdischen Komplettierungsausrüstungsteils behandelt wird, wobei der Chelatbildner in dem Verfahren zum Chelatisieren von wenigstens Kalziumionen verwendet wird und der pH-Wert des Behandlungsfluids gleich oder größer als 5 ist.

## Revendications

1. Procédé de traitement d'un équipement tubulaire de puits de forage de fond ou de complétion souterraine, le procédé comprenant les étapes suivantes :
(A) détermination de la probabilité de la présence de tartre dans l'équipement tubulaire de puits de forage de fond ou de complétion souterraine ;
(B) formation ou utilisation d'un fluide de traitement comprenant :
(i) de l'eau ;
(ii) un agent de chélation servant à former un cycle hétérocyclique qui contient un ion métallique attaché à au moins deux ions non métalliques, l'agent de chélation étant présent à une concentration comprise entre 1 et 80 % en poids de l'eau ; et
(iii) un agent d'augmentation de la viscosité contenant un matériau polymère ;
(C) l'introduction du fluide de traitement dans l'équipement tubulaire de puits de forage de fond ou de complétion souterraine ; et
(D) le fait de laisser le fluide de traitement se dissoudre en éliminant les carbonates et d'autres minéraux de l'équipement tubulaire de puits de forage de fond ou de complétion souterraine, le pH du fluide de traitement étant supérieur ou égal à 5.

2. Procédé selon la revendication 1, dans lequel le pH du fluide de traitement est compris entre 6 et 12.

3. Procédé selon la revendication 1, dans lequel l'agent de chélation est utilisé dans le procédé de chélation d'au moins des ions calcium.

4. Procédé selon la revendication 1, dans lequel l'agent de chélation est soluble dans l'eau distillée à température et à pression standard à une concentration d'au moins 0,2 équivalent-mole pour les ions calcium par litre de l'eau distillée.

5. Procédé selon la revendication 1, dans lequel l'agent de chélation est choisi dans l'ensemble constitué d'acide éthylènediaminetétra-acétique (« EDTA »), d'acide nitrilotriacétique (« NTA »), d'acide hydroxyéthyléthylènediaminetriacétique (« HEDTA »), d'acide diéthylènetriaminepenta-acétique (« DTPA »), d'acide propylènediaminetétra-actétique (« PDTA »), d'acide éthylènediaminedi(ortho-hydroxyphénylacétique) (« EDDHA »), d'un sel de sodium ou de potassium de l'un quelconque de ceux qui précèdent, de sel tétrasodique d'acide dicarboxyméthyl glutamique (« GLDA ») ou toute combinaison de l'une quelconque de ce qui précède en proportions quelconques.

6. Procédé selon la revendication 1, dans lequel l'agent d'augmentation de la viscosité comprend un matériau polymère choisi dans l'ensemble constitué de : gomme de guar, des dérivés de cellulose, gomme de Welan, biopolymère de xanthane, diutane, scléroglucane et succinoglycane biopolymère et leur combinaison.

7. Procédé selon la revendication 1, dans lequel l'agent d'augmentation de la viscosité est à une concentration comprise entre 0,05 et 10 % en poids de l'eau.

8. Procédé selon la revendication 1, dans lequel le fluide de traitement comprend en outre un rupteur servant à rompre l'agent d'augmentation de la viscosité.

9. Procédé selon la revendication 1, dans lequel le fluide de traitement comprend en outre un rupteur à faire porter par le fluide de traitement dans le puits de forage pour la rupture d'un agent d'augmentation de la viscosité.

10. Procédé selon la revendication 1, dans lequel le fluide de traitement comprend en outre : un adjuvant pour moussage.

11. Procédé selon la revendication 1, dans lequel l'étape d'introduction du fluide de traitement dans le puits de forage comprend en outre :
l'introduction du fluide de traitement à un débit et sous une pression inférieurs au gradient de fracture de la formation souterraine.

12. Procédé selon la revendication 1, comprenant en outre l'étape suivante : après l'étape d'introduction du fluide de traitement, l'introduction d'un fluide de traitement non viscosifié dans le puits de forage, le fluide de traitement non viscosifié comprenant : de l'eau et un agent de chélation sans quelque concentration que ce soit de n'importe quel agent d'augmentation de la viscosité contenant un matériau polymère.

13. Procédé selon la revendication 1, dans lequel au moins une partie de l'équipement tubulaire de puits de forage de fond ou de complétion souterraine est traitée, l'agent de chélation étant utilisé dans le procédé de chélation d'au moins des ions calcium, et le pH du fluide de traitement est supérieur ou égal à 5.
